# DEMANDE DE BREVET EUROPEEN

(11) **EP 3 770 885 A1**
(43) Date de publication de la demande: **27.01.2021**
(21) Numéro de dépôt: 20183891.9
(22) Date de dépôt: 03.07.2020
(51) Int. Cl.: G09B 5/06

(54) **SYSTÈME DE NARRATION ANIMÉE, METTANT EN OEUVRE UN APPAREIL DE PROJECTION D'AU MOINS UNE ANIMATION SENSORIELLE NUMÉRIQUE**

(30) Priorité: 24.07.2019 FR 1908377
(71) Demandeur: Gauguin, Steven, 75011 Paris (FR)
(72) Inventeur: Gauguin, Steven, 75011 Paris (FR)
(74) Mandataire: Lequien, Philippe

(57) **Abrégé**

L'invention concerne un système de narration animée comprenant :
- au moins un support d'au moins un texte à narrer ;
- au moins un appareil de projection d'au moins une animation sensorielle numérique,
- au moins une première base de données d'animations sensorielles numériques à projeter par l'appareil de projection pendant une narration du texte à narrer,
- au moins une unité électronique de commande de l'appareil de projection, l'unité électronique étant paramétrée pour recevoir un signal de déclenchement d'une animation sensorielle numérique contenue dans la première base de données,
- des moyens d'émission de signaux de déclenchement destinés à être détectées par l'unité électronique,
caractérisé en ce que l'unité électronique est paramétrée pour diffuser une animation sensorielle numérique jusqu'à réception à nouveau d'un signal de déclenchement et pour diffuser une nouvelle animation sensorielle numérique à ladite réception à nouveau d'un signal de déclenchement.

## Description

Le domaine de l'invention est celui de la conception et de la fabrication de dispositif permettant d'associer une histoire lue à voix haute avec du contenu vidéo animé.

Plus précisément, l'invention concerne un système dans lequel la lecture d'une histoire est combinée avec une projection d'images, et plus particulièrement une projection d'animation vidéo, sur le plafond surplombant le lit d'un enfant à l'écoute de l'histoire.

Dans le domaine de l'invention, plusieurs solutions ont été proposées pour enrichir une histoire lue à voix haute avec du contenu vidéo animé.

On connait par exemple un projecteur multimédia décrit par le document de brevet publié sous le numéro US2008036920, qui comprend une base et un dispositif optique de projection, la base comprenant un lecteur de disque optique pour lire un disque optique, une charnière reliant la base et le dispositif optique de projection de façon à pouvoir orienter la lampe de projection en direction par exemple d'un plafond.

On connait par ailleurs d'autres types de dispositifs de projection pour contes pour enfants tels que ceux décrits par les documents publiés sous le numéro ES1072797 ou US5266980.

On connait également des solutions dans lesquelles la lecture du conte s'opère par l'intermédiaire d'un livre physique, ce livre disposant d'un procédé de suivi de pages et proposant une lecture enrichie déclenchant des évènements d'une durée définie.

Le document de brevet publié sous le numéro FR2743754 décrit un livre animé couplé à un dispositif électronique générant un ou plusieurs signaux sensibles pour produire au moins une animation sonore et/ou visuelle et/ou olfactive, chaque animation correspondant à un positionnement prédéterminé des pages du livre.

Les documents de brevets publiés sous le numéro WO2009086308, WO03090180, WO0152220 et WO2017080018 décrivent d'autres techniques s'inscrivant dans la même approche générale.

Les « projecteurs d'histoire » proposent donc des solutions d'animation, mais sont limitées à une diffusion du conte de manière audionumérique à l'aide de voix pré-enregistrées, et ne permettent donc pas une lecture à voix haute.

Les livres avec procédé de suivi de pages et lecture enrichie ne permettent pas une réelle synchronisation de la lecture avec la diffusion d'animation.

En d'autres termes, il n'existe pas actuellement de solution offrant la possibilité de pratiquer une lecture d'histoire à voix haute depuis un livre numérique (ordiphone, tablette informatique, liseuse...) ou papier, tout en enrichissant cette lecture par du contenu multimédia synchronisé, et plus particulièrement en ce qui concerne une animation de type vidéo et/ou sonore.

En effet, dans les systèmes antérieurs, les séquences d'animation visuelle et/ou sonore ont une durée fixe prédéterminée. Hors, la durée de l'animation, une fois déclenchée, ne correspond pas systématiquement au temps de lecture qui, lui, peut être variable d'une personne à une autre. Il en résulte que le contenu enrichi n'est pas réellement synchronisé avec une lecture à voix haute.

On connaît également les documents de brevets publiés sous les numéros US2011/093103, US2010/002151 et US8792818.

US2011/093103 décrit un livre électronique permettant l'enregistrement audio de notes audio.

Cette technique met en oeuvre un module d'affichage pour afficher le contenu du livre électronique, une unité mémoire pour stocker un ou plusieurs fichiers de livres électroniques, une micro-unité de traitement pour lire le fichier de livre électronique et l'afficher sur le module d'affichage.

Le système comprend en outre un module d'enregistrement/diffusion pour entrer une note audio, ainsi qu'une table de correspondance pour enregistrer la relation de liaison liée au fichier de données audio et au fichier de livres électroniques.

Après enregistrement d'une note audio, une icône est créée par l'utilisateur à l'emplacement voulu dans le fichier de livre électronique. Cette icône permet le déclenchement de la lecture du fichier de la note audio.

US2010/002151 décrit la combinaison d'un support portable et d'un dispositif de communication avec un projecteur détachable. Les deux unités comprennent une interface réseau sans fil. L'unité de projecteur détachable comprend en outre un processeur, un système de fichier, un cache, un projecteur et une alimentation. Les fichiers multimédias sont copiés dans le système de fichiers du projecteur avant d'être détaché du support et du dispositif de communication qui sera ensuite utilisé comme télécommande pour le projecteur détaché. Le contrôle est obtenu en transmettant les métadonnées du support et du dispositif de communication à l'unité de projection pour récupérer les fichiers multimédias associés pour la projection.

En outre, un procédé pour partager des fichiers vidéo/audio par un groupe d'utilisateurs avec des dispositifs portables d'une manière synchronisée est décrit. Dans ce contexte, les appareils forment un réseau sans fil local avec une horloge intégrée calibrée dans chaque appareil. Les signaux vidéo et audio sont affectés d'une heure de début de lecture. Les fichiers audio sont diffusés sur le réseau sans fil local et reçus par le périphérique de connexion de chaque utilisateur pendant que les fichiers vidéo sont envoyés au projecteur pour la projection.

Les fichiers vidéo et audio sont lus de manière synchronisée sur la base des horloges calibrées.

Enfin, US8792818 décrit un procédé et un appareil pour enregistrer et éditer des livres audio qui indexent le texte et l'enregistrement audio l'un sur l'autre. La technique décrite permet de localiser une partie de l'enregistrement audio correspondant à une partie du texte. La partie audio peut ensuite être modifiée. Les images peuvent être intégrées dans le texte. Les images peuvent être incluses dans le fichier complété par une présentation multimédia. L'indexation peut également être utilisée pour faciliter le placement de diverses prises dans le bon ordre séquentiel dans l'enregistrement maître.

L'enregistrement audio d'origine est maintenu inchangé tandis que les modifications de l'édition sont contenues dans un fichier séparé.

Le procédé et l'appareil peuvent également être utilisés pour générer des fichiers audio et texte compressés pour faciliter le transfert par courrier électronique.

Aucun des documents US2011/093103, US2010/002151 et US8792818 n'aborde le problème technique d'ajuster le temps d'écoute d'une animation, qu'elle soit audio ou vidéo, avec le temps de lecture, qui peut être variable, d'une plage de lecture d'un livre électronique ou non.

L'invention a donc pour objectif de pallier les inconvénients de l'art antérieur.

Plus précisément, l'invention a pour objectif de proposer un système de narration animé, dans lequel la durée de diffusion d'une animation, d'une durée prédéfinie, peut être adaptée à un temps de lecture qui peut être variable d'une personne à l'autre ou, en tout état de cause, adapté à une durée de lecture différente de la durée de lecture prédéfinie de l'animation.

L'invention a également pour objectif de fournir un tel système dans lequel la projection du contenu enrichi ne passe pas nécessairement par la mise en oeuvre d'un écran.

L'invention a encore pour objectif de fournir un tel système de narration animée qui puisse fonctionner avec différents type de supports du texte à narrer (livre numérique ou livre papier).

Ces objectifs, ainsi que d'autres qui apparaîtront par la suite, sont atteints grâce à l'invention qui a pour objet un système de narration animée comprenant :
- au moins un support d'au moins un texte à narrer ;
- au moins un appareil de projection d'au moins une animation sensorielle numérique,
- au moins une première base de données d'animations sensorielles numériques à projeter par l'appareil de projection pendant une narration du texte à narrer,
- au moins une unité électronique de commande de l'appareil de projection, l'unité électronique étant paramétrée pour recevoir un signal de déclenchement d'une animation sensorielle numérique contenue dans la première base de données,
- des moyens d'émission de signaux de déclenchement destinés à être détectées par l'unité électronique,
caractérisé en ce que l'unité électronique est paramétrée pour diffuser en boucle une animation sensorielle numérique jusqu'à réception à nouveau d'un signal de déclenchement et pour diffuser une nouvelle animation sensorielle numérique à ladite réception à nouveau d'un signal de déclenchement.

Ainsi, grâce à l'invention, le temps de lecture d'une section du compte associée à une animation sensorielle numérique est entièrement associé à la diffusion de ladite animation sensorielle numérique, qui va être « rejouée » tant que la lecture de la section n'est pas terminée.

La durée de l'animation sensorielle numérique peut donc être différente, et en particulier plus courte, que la durée de lecture de la section, sans qu'il n'y ait de blanc dans l'enrichissement du contenu, le paramétrage de l'unité électronique assurant la synchronisation de la durée de diffusion de l'animation avec la durée de la lecture de la section en cours.

On comprend que dans un système selon l'invention, la durée de lecture de la section en cours est définie par la durée séparant deux signaux de déclenchement, l'un pour déclencher l'animation associée à la section en cours, et l'autre pour déclencher l'animation correspondant à la section suivante (qui devient alors la section en cours).

Selon un premier mode de réalisation, le texte prend la forme d'un fichier informatique incluant des pages numériques chacune associée à un code numérique de page, le support étant une unité informatique intégrant un lecteur de fichiers informatiques, et l'unité électronique étant paramétrée pour détecter un code numérique de page et le traduire en signal de déclenchement.

Ainsi, selon ce mode de réalisation, le suivi des pages est une information qui est récupérée depuis le livre numérique constitué par le fichier informatique incluant les pages numériques du livre.

Dans ce cas, selon un mode de réalisation particulier, le fichier informatique inclut en outre des moyens de déclenchement d'au moins une animation complémentaire de l'animation sensorielle numérique.

Ainsi, il est possible de déclencher manuellement une animation complémentaire, par exemple sonore, à l'aide de moyens de déclenchement actionnables par l'intermédiaire du support numérique (lien hypertexte, bouton tactile...).

Selon un autre mode de réalisation envisagé, l'unité électronique intègre un logiciel de reconnaissance vocale et est paramétrée pour recevoir un signal de déclenchement sous forme d'au moins un mot énoncé de façon audible pour l'unité électronique.

Dans ce cas, on comprend que le signal de déclenchement est constitué par un mot clé ou par une séquence de mots clés identifiés lors de la lecture. Ce ou ces mots clés sont alors captés par l'unité électronique qui déclenche l'animation correspondante.

Selon un autre mode de réalisation, le système comprend une télécommande, et l'unité électronique est paramétrée pour détecter un signal de déclenchement émis par la télécommande.

Comme cela va être expliqué plus en détails par la suite, un tel signal de déclenchement peut être renseigné manuellement par l'utilisateur, le signal correspondant alors à une position de page et, plus précisément, un changement d'état de la page.

Selon encore un autre mode de réalisation, le système comprend des moyens d'enregistrement numériques pour créer un fichier audionumérique, et le système comprend les moyens d'insertion de marqueurs temporels dans le fichier audionumérique, l'unité électronique étant paramétrée pour détecter un marqueur temporel et le traduire en signal de déclenchement.

Selon ce mode de réalisation, un parent, un proche de l'enfant voire un comédien, procède à un enregistrement en mode narration audio, ce qui permet de lancer la narration du conte puis de quitter la chambre de l'enfant.

Dans ce cas, pour synchroniser la voix de l'enregistrement avec les animations visuelles et/ou sonores, la personne qui procède à l'enregistrement renseigne, par des marqueurs tmporels, le moment où les différentes animations doivent être déclenchées.

Selon une autre approche de l'invention, le support est un livre papier incluant des pages chacune associée à un émetteur d'un code numérique de page, et l'unité électronique est paramétrée pour détecter un code numérique de page et le traduire en signal de déclenchement.

Selon ce mode de réalisation, le signal de déclenchement est associé à un changement de page d'un livre papier. Chacune des pages est donc munie de puce type NFC, RFID, ou de cellule Cds photoconductrice. Ces puces ou cellules émettent donc un signal à l'unité électronique qui déclenche les animations visuelles et/ou sonores, de manière identique avec un livre numérique.

Selon une solution préférentielle, le système comprend une plateforme informatique donnant accès à un site web comprenant au moins une deuxième base de données de texte à narrer, chacun associé à la première base de données.

De cette façon, l'utilisateur accède, via une application informatique mobile, à une bibliothèque de contes ou de contenus éducatifs, stockés sur un serveur web.

Un tel système permet de donner un accès à une bibliothèque qui peut être enrichie par du nouveau contenu régulièrement. Il est alors possible d'offrir la possibilité d'acheter les contes à l'unité ou par lot.

Dans ce cas, le système comprend des unités informatiques détenues par des utilisateurs lecteurs, les unités informatiques étant aptes à communiquer avec la plateforme informatique via une application informatique.

Avantageusement, la plateforme informatique est configurée pour permettre le téléchargement d'un texte à narrer associé à la première base de données.

Ainsi, l'utilisateur peut, en fonction de ses disponibilités, télécharger des contenus, puis les utiliser ultérieurement hors connexion.

L'invention concerne également un procédé mettant en œuvre un système de narration animée tel que décrit précédemment, caractérisé en ce qu'il comprend une étape de synchronisation d'une animation sensorielle numérique avec un temps de lecture d'une section du texte à narrer, la synchronisation consistant à déclencher une animation sensorielle numérique par l'émission d'un signal de déclenchement, et à diffuser ladite animation sensorielle numérique en boucle jusqu'à émission à nouveau d'un signal de déclenchement et à diffuser une nouvelle animation sensorielle numérique à ladite réception à nouveau d'un signal de déclenchement.

D'autres caractéristiques et avantages de l'invention apparaîtront plus clairement à la lecture de la description suivante de plusieurs modes de réalisation préférentiels de l'invention, donnés à titre d'exemples illustratifs et non limitatifs, et des dessins annexés parmi lesquels :
- la figure 1 est une représentation schématique d'un système de narration animée selon le principe général de l'invention ;
- la figure 2 est une représentation synoptique d'une animation réalisée selon le système de l'invention ;
- la figure 3 illustre de façon schématique un premier mode de réalisation de l'invention ;
- la figure 4 illustre de façon schématique un deuxième mode de réalisation de l'invention ;
- la figure 5 illustre de façon schématique un troisième mode de réalisation de l'invention ;
- la figure 6 illustre de façon schématique un quatrième mode de réalisation de l'invention ;
- la figure 7 illustre de façon synoptique une variante de réalisation dans un système selon l'invention.

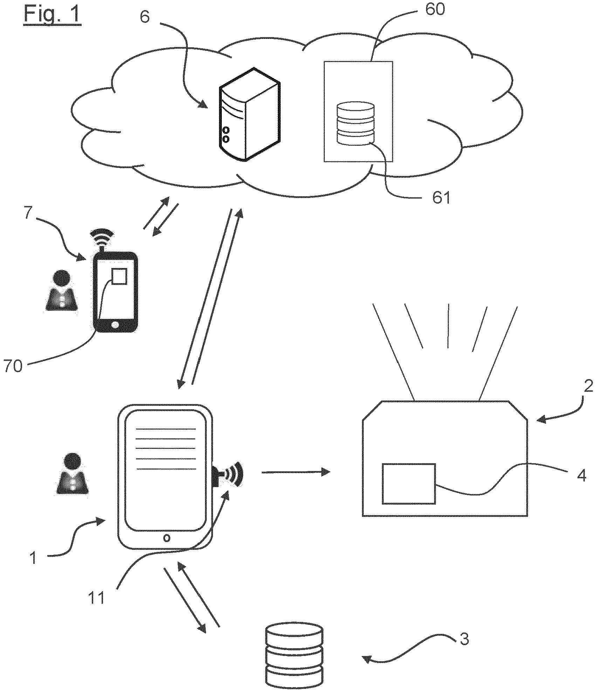

Tel qu'illustré par la figure 1, un système de narration animé selon l'invention comprend :
- un support 1 permettant de lire un ou plusieurs textes à narrer, ce support pouvant être de différentes natures comme cela va être expliqué plus en détails par la suite ;
- un appareil de projection 2, permettant de projeter, de préférence sur un plafond, au moins une animation sensorielle numérique (animation visuelle, animation sonore...) ;
- au moins une première base de données 3 d'animation sensorielle et numérique, destinées à être projetées par l'appareil de projection 2, ceci pendant une narration du texte à narrer ;
- une unité électronique 4, constituant une unité de commande de l'appareil de projection et étant paramétrée pour recevoir un signal de déclenchement d'une animation sensorielle numérique contenue dans la première base de données 3 ;
- des moyens d'émission 11 de signaux de déclenchement destinés à être détectés par l'unité électronique 4.

On note que, en pratique, l'unité électronique est un composant intégré à l'appareil de projection.

Selon le principe de l'invention, l'unité électronique 4 est paramétrée pour diffuser une animation sensorielle numérique jusqu'à réception à nouveau d'un signal de déclenchement et pour diffuser une nouvelle animation sensorielle numérique à ladite réception à nouveau d'un signal de déclenchement.

Selon le mode de réalisation de l'invention illustré par la figure 1, le système comprend et met en œuvre une plateforme informatique 6 (un « store ») donnant accès à un site web 60 comprenant une deuxième base de données 61 de texte à narrer, chacun associé à une animation sensorielle (vidéo, sonore, olfactive...) numérique de la première base de données.

Ainsi, des utilisateurs-lecteurs pourvus d'unités informatiques 7 (smartphone, tablette informatique...) peuvent se connecter via une application informatique 70 à la plateforme informatique pour accéder à une bibliothèque contenant une série de contes ou de légendes, ou encore des contenus éducatifs stockés sur le serveur web. Bien entendu, les unités informatiques 7 détenues par les utilisateurs-lecteurs sont aptes à communiquer, par tous moyens appropriés connus de l'homme de l'art, avec la plateforme informatique via l'application informatique 70.

De plus, la plateforme informatique est configurée pour permettre le téléchargement d'un texte à narrer associé à une animation sensorielle numérique de la première base de données associée audit texte à narrer.

Par ailleurs, l'appareil de projection 2 est avantageusement un vidéo-projecteur connecté, contrôlé par l'application informatique par l'intermédiaire d'une communication sans fil de type Wifi ou Bluetooth (marque déposée).

La lecture se fait, pour l'utilisateur-lecteur (qui sera le plus souvent un parent), sur une tablette informatique ou un ordiphone (voire un livre papier comme cela va être expliqué par la suite) et la projection se fait au-dessus lit d'un enfant, au plafond.

Le vidéo-projecteur peut disposer d'une mémoire interne dans laquelle est stockée, à sa mise en service, un choix de texte à narrer, en libre accès.

La plateforme informatique peut être enrichie par du contenu nouveau accessible par un système de e-commerce, avec achat à l'unité ou achat groupé.

Avec un système tel que décrit précédemment, le fonctionnement peut être le suivant.

Au démarrage du vidéo-projecteur (constituant l'appareil de projection au sens de l'invention), celui-ci se connecte automatiquement via Wifi ou Bluetooth ou autre moyen de communication sans fil, et par l'intermédiaire par exemple de l'ordiphone de l'utilisateur-lecteur à la plateforme informatique pour accéder à l'ensemble du catalogue de contes/histoires accompagnés de leur animation sensorielle numérique.

Bien sûr, le vidéo-projecteur peut alternativement être autonome en termes de moyens de communication. Le cas échéant, il se connecte directement à la plateforme informatique pour accéder à l'ensemble du catalogue.

L'utilisateur est quant à lui automatiquement identifié grâce à son compte créé au préalable via l'application informatique ou directement sur le site web du système.

Dans un premier temps, seuls les contes/histoires et animations sensorielles numériques via la plateforme, ou proposés gracieusement, sont accessibles à la projection.

L'application informatique est également connectée au compte utilisateur du serveur et communique avec le vidéo-projecteur par Wifi ou Bluetooth.

Sur l'application informatique, l'utilisateur fait le choix d'un texte à narrer. Chaque histoire ou texte dispose d'un aperçu qui peut être visualisé directement sur le vidéo-projecteur ou depuis l'ordiphone. Dès validation, une requête est envoyée à la plateforme informatique, et les animations sensorielles numériques liées au texte (donc à la première base de données liées au texte) sont téléchargées sur le vidéo projecteur. L'utilisateur peut également activer un contenu sonore, téléchargé de manière identique aux animations sensorielles numériques de type vidéo ou sonores.

On note que, pour pallier à d'éventuels problèmes de connexion internet pendant la lecture, les contenus peuvent être téléchargés en intégralité avant de débuter l'histoire. A la fin de la lecture, le système propose à l'utilisateur de lire une nouvelle histoire, que l'utilisateur accepte ou non. D'autres modes de fonctionnement peuvent également être proposés à l'utilisateur et sont décrits par la suite.

Lors de la lecture du texte grâce au support correspondant, la synchronisation de la lecture avec les animations sensorielles numériques est, de façon générale, rendue possible par la variation de la durée de l'animation pour qu'elle puisse correspondre au temps de lecture à voix haute.

Pour cela, chaque animation sensorielle numérique comprend trois « chapitre », à savoir :
- une première animation appelée « animation d'entrée » AE;
- une « animation boucle » AB ;
- une animation « sortie » AS.

Ainsi, lors de l'estimation de la position d'une page d'un livre numérique ou papier constituant le support du texte à narrer, un signal de déclenchement provoque l'appel d'une première animation appelée « animation d'entrée ». Ce signal de déclenchement peut par exemple être provoquée par l'atteinte d'un pied de page de la page en cours de lecture. La durée de cette animation a durée définie « TAE » (Temps Animation Entrée). Cette séquence « TAE » terminée, est appelée l'« animation boucle » d'une durée définie « TAB » (Temps Animation Boucle) qui va être lue en boucle jusqu'à réception à nouveau d'un signal de déclenchement (voire une seule fois si la synchronisation le permet). L'animation boucle va permettre de rendre variable la durée totale de la séquence animée, étant jouée en boucle n fois (avec n ≥ 1) jusqu'à ce qu'une animation sortie soit déclenchée par un signal de déclenchement, ce signal déclenchant simultanément l'animation « entrée » de l'animation sensorielle numérique suivante.

En pratique, lors de l'exécution de ces séquences animées à temps variable, les trois types d'animation (entrée/boucle/sortie) peuvent être utilisés comme briques indépendantes et facultatives pour réaliser une séquence d'animation à temps variable. Par exemple, on peut exécuter selon les cas les séquences suivantes :
- entrée, boucle N fois, sortie ;
- entrée, boucle N fois ;
- boucle N fois, sortie ;
- boucle N fois.

Afin que le procédé de synchronisation fonctionne, il peut être couplé à un procédé de suivi des pages, ou plus globalement de suivi de l'histoire. Ce procédé diffère selon le type de support utilisé pour la lecture du texte à narrer. Différents modes de réalisation sont décrits par la suite.

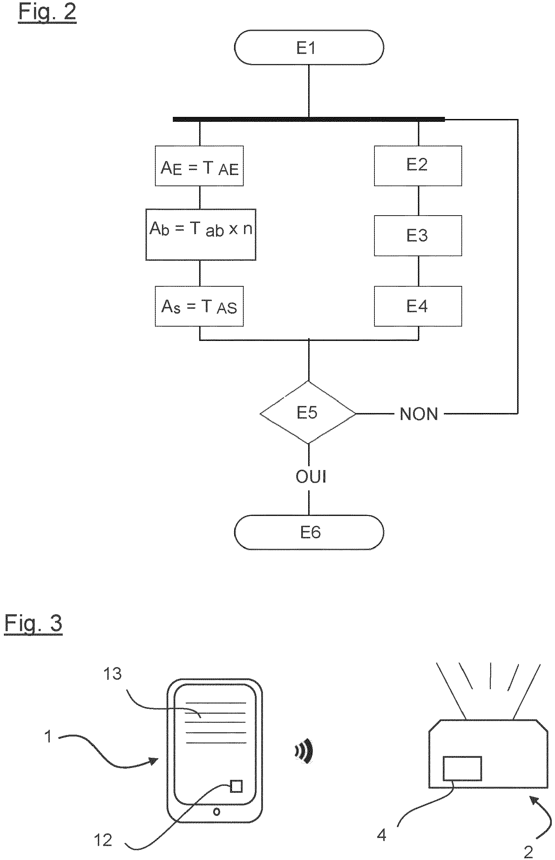

Le procédé de synchronisation tel que décrit précédemment est illustré de façon synoptique par la figure 2.

Tel qu'illustré, après la réalisation d'une étape E1 correspondant au lancement de l'histoire, la synchronisation (symbolisée par la barre horizontale en trait épais) est déclenchée, ceci par une étape correspondant à l'affichage d'une page n coïncidant avec l'émission d'un signal de déclenchement qui provoque l'exécution d'une animation d'entrée AE. L'étape E3 correspond à la lecture de la page n, ceci correspondant avec l'exécution de l'animation boucle AB. L'étape E4 correspond à un changement de page coïncidant avec l'émission à nouveau d'un signal de déclenchement, qui déclenche l'animation sortie AS.

L'étape E5 consiste à émettre un test, s'agissant de savoir si on passe à la dernière page ou pas. Si oui, on passe à une étape E6 de fin d'histoire. Si non, l'histoire se poursuit avec reprise du procédé de synchronisation.

Selon un premier mode de réalisation, le texte à narrer prend la forme d'un fichier informatique incluant des pages numériques chacune associée à un code numérique 12 de page. Dans ce cas, le support 1 est une unité informatique intégrant un lecteur 13 de fichiers informatiques et l'unité électronique est paramétrée pour détecter un code numérique de page et le traduire en signal de déclenchement, ce qui met fin à la lecture en boucle de l'animation sensorielle numérique en cours et déclenche l'animation sensorielle numérique correspondant à la page suivante.

Selon ce mode de réalisation, le signal de déclenchement est émis par le support 1, constitué par exemple par une tablette informatique. Ce signal de déclenchement est reçu par l'unité électronique qui exécute un logiciel de commande du dispositif de projection, en vue d'enrichir le texte nu par une animation sensorielle (animation vidéo, animation sonore ou animation voix, avec projection de l'animation vidéo).

On comprend que, selon ce mode de réalisation, le texte à narrer est donc constitué par un livre numérique.

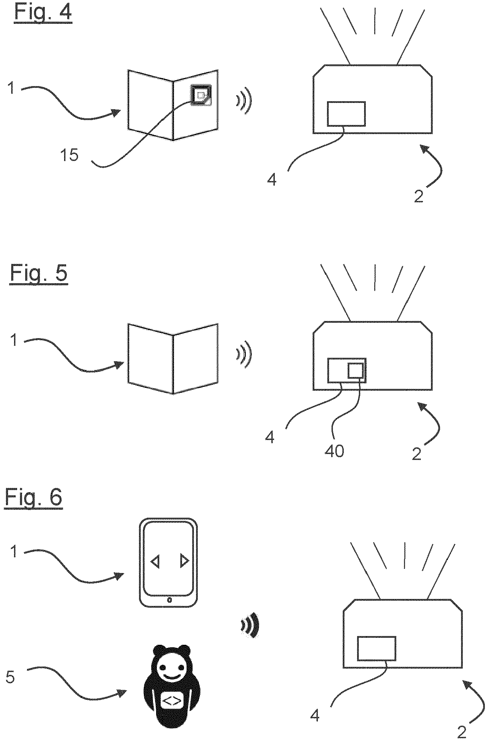

Selon un deuxième mode de réalisation illustré par la figure 4, le support 1 est un livre papier incluant des pages chacune associée à un émetteur 15 d'un code numérique de page. Dans ce cas, l'unité électronique 4 est paramétrée pour détecter un code numérique de page et le traduire en signal de déclenchement.

Ce signal de déclenchement est reçu et traité par l'unité électronique du dispositif de projection de la même manière que celle décrite en référence au premier mode de réalisation.

On note que l'émetteur 15 du code numérique de page peut être une puce RFID, NFC ou une cellule CdS.

Selon un troisième mode de réalisation illustré par la figure 5, l'unité électronique 4 intègre un logiciel 40 de reconnaissance vocale. Dans ce cas, l'unité électronique est paramétrée pour recevoir un signal de déclenchement sous forme d'au moins un mot énoncé (ou une séquence de mots énoncés) de façon audible par l'unité électronique. Ainsi, le ou les mots clé constituant le signal de déclenchement sont captés par l'unité électronique, et ce signal de déclenchement est traité de la même manière que celle décrite en référence au premier mode de réalisation.

On note que la synchronisation selon ce mode de réalisation est rendu possible soit avec un livre papier soit avec un livre numérique, grâce à la reconnaissance vocale.

Selon un quatrième mode de réalisation illustré par la figure 6, le système comprend une télécommande 5 et l'unité électronique est paramétrée pour détecter un signal de déclenchement émis par la télécommande 5. Ce signal de déclenchement est ensuite reçu et traité par l'unité électronique de la même manière que celle décrite en référence au premier mode de réalisation.

Selon une variante, l'utilisateur renseigne le changement de page (provoquant l'émission d'un signal de déclenchement (depuis l'application informatique via un écran invitant l'utilisateur à indiquer le changement d'état de page. L'ordiphone ou tablette numérique incluant l'application informatique fait alors office de télécommande.

Selon un cinquième mode de réalisation, lors d'une lecture depuis un livre numérique, le fichier informatique incluant le livre numérique propose à l'utilisateur ou l'auteur un ou plusieurs liens hypertexte ou un ou plusieurs boutons destinés à constituer des moyens de déclenchement d'au moins une animation complémentaire de l'animation sensorielle numérique. A titre d'exemple, à la lecture d'un passage du texte relatant le bruit que font les feux d'artifice, l'utilisateur a la possibilité de déclencher, via un lien hypertexte ou un bouton, le son du bruit produit par les explosions du feu d'artifice.

Selon un sixième mode de réalisation, le texte à narrer est enregistré dans un fichier audio. Le système comprend alors des moyens d'enregistrement numérique d'une voix pour créer le fichier audio-numérique, et le système comprend des moyens d'insertion de marqueurs temporels dans le fichier audio-numérique, l'unité électronique étant paramétrée pour détecter un marqueur temporel et le traduire en signal de déclenchement.

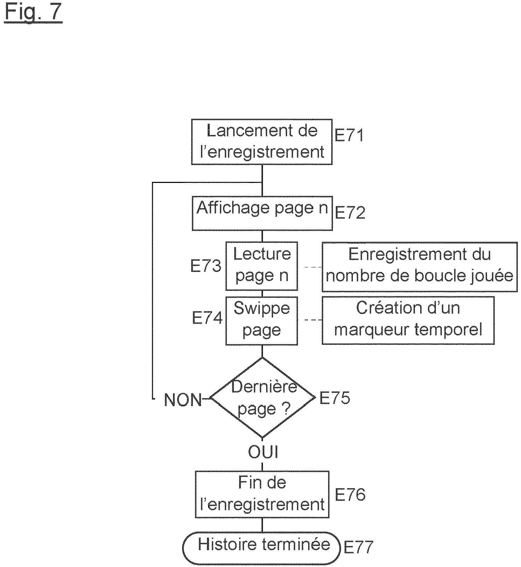

Le fonctionnement d'un tel mode de réalisation est illustré par la figure 7.

Selon l'illustration synoptique du fonctionnement procuré par la figure 7, l'enregistrement du texte avec création du marqueur temporel s'effectue de la façon suivante :
- étape E71 : début de l'enregistrement ;
- étape E72 : affichage page n (avec n=1 à la première page) et étape E73 : lecture de la page n ;
- étape E74 : en fin de page n, création d'un marqueur temporel correspondant à l'affichage de la page suivante ;
- étape E75 : test sur l'atteinte de la dernière page ou non, avec retour à l'étape E72 si « non » et passage à l'étape E76 ;
- étape E76 : fin de l'enregistrement ;
- étape E77 : marqueur de fin d'histoire et sauvegarde.

D'autres caractéristiques optionnelles peuvent être intégrées au système.

Le système peut ainsi permettre la programmation d'un mode veilleuse depuis l'application informatique, ou par commande vocale, ou depuis le dispositif de projection. La programmation permet de choisir le type de scène et/ou d'animation projeté sur la surface de projection (plafond, ...). Les scènes du mode veilleuse peuvent être du type ciel étoilé, parade d'animaux, abstrait, « comptage de moutons », ou rappeler des images d'une histoire déjà lue. La programmation permet d'activer des séquences audio (comptine, ambiance sonore, musique, bruit, silence...) et le volume sonore qui accompagne les différentes scènes du mode veilleuse. La programmation permet de choisir la durée du mode veilleuse. Elle permet également d'activer un scintillement et une couleur de leds incorporés dans le coffret du dispositif de projection. Chaque option en mode veilleuse peut être activée ou non de manière indépendante. L'intensité lumineuse et/ou sonore diminue progressivement jusqu'à l'arrivée à terme du temps programmé. Une fois le temps défini écoulé, l'utilisateur reçoit une notification de la fin du mode veilleuse et a la possibilité de relancer le mode veilleuse ou bien de commander l'arrêt de la coupure de connexion du dispositif de projection, ceci à distance, par l'intermédiaire de l'application informatique.

Le système peut également proposer une option appelée « en cas de cauchemar ». Selon cette option, le système est programmé pour détecter qu'un enfant se réveille à cause d'un cauchemar, ceci grâce à une reconnaissance vocale programmée, ce qui va déclencher la projection par le dispositif de projection d'une animation qui va dédramatiser l'instant de trouble que vient de vivre l'enfant. Une fois l'animation terminée, le système peut passer sur le mode veilleuse explicité précédemment, que les parents auront programmé en amont dans une section du système désignée par « en cas de cauchemar ». Il est également possible que, lorsque le mode « en cas de cauchemar » est appelé par l'enfant, un baby-phone s'active et une notification est envoyée sur l'application informatique du ou des parents, afin que ceux-ci puissent, depuis leur application informatique, surveiller si l'enfant a réussi à retrouver son calme et son sommeil.

Selon un autre mode du système, dit « mode baby-phone », le dispositif de projection intègre un micro ou une enceinte qui permet aux parents de surveiller le bon endormissement de l'enfant.

Selon un autre mode du système dit « mode réveil », le dispositif peut être programmé avec une heure de réveil. En pratique, ce mode reprend le mode de fonctionnement du mode veilleuse à la différence que l'intensité lumineuse et/ou sonore de l'animation augmente au lieu de diminuer.

Selon encore une autre option du système, le dispositif de projection peut présenter les yeux d'un personnage, qui donne des indications à l'enfant sur les différentes étapes de sa nuit. Au moment du coucher, à la fin d'une histoire, le dispositif est programmé pour fermer les yeux du personnage, en vue d'indiquer à l'enfant qu'il est temps de dormir. Au réveil, le dispositif est programmé pour ouvrir les yeux du personnage, en vue d'informer l'enfant qu'il est possible de se lever.

## Revendications

1. Système de narration animée comprenant :
- au moins un support d'au moins un texte à narrer ;
- au moins un appareil de projection d'au moins une animation sensorielle numérique,
- au moins une première base de données d'animations sensorielles numériques à projeter par l'appareil de projection pendant une narration du texte à narrer,
- au moins une unité électronique de commande de l'appareil de projection, l'unité électronique étant paramétrée pour recevoir un signal de déclenchement d'une animation sensorielle numérique contenue dans la première base de données,
- des moyens d'émission de signaux de déclenchement destinés à être détectées par l'unité électronique,
**caractérisé en ce que** l'unité électronique est paramétrée pour diffuser en boucle une animation sensorielle numérique jusqu'à réception à nouveau d'un signal de déclenchement et pour diffuser une nouvelle animation sensorielle numérique à ladite réception à nouveau d'un signal de déclenchement.

2. Système de narration animée selon la revendication 1, **caractérisé en ce que** le texte prend la forme d'un fichier informatique incluant des pages numériques chacune associée à un code numérique de page, le support étant une unité informatique intégrant un lecteur de fichier informatique, et **en ce que** l'unité électronique est paramétrée pour détecter un code numérique de page et le traduire en signal de déclenchement.

3. Système de narration animée selon la revendication 2, **caractérisé en ce que** le fichier informatique inclut des moyens de déclenchement d'au moins une animation complémentaire de l'animation sensorielle numérique.

4. Système de narration animée selon la revendication 1, **caractérisé en ce que** l'unité électronique intègre un logiciel de reconnaissance vocale et est paramétrée pour recevoir un signal de déclenchement sous forme d'au moins un mot énoncé de façon audible pour l'unité électronique.

5. Système de narration animée selon la revendication 1, **caractérisé en ce qu'**il comprend une télécommande et **en ce que** l'unité électronique est paramétrée pour détecter un signal de déclenchement émis par la télécommande.

6. Système de narration animée selon la revendication 1, **caractérisé en ce qu'**il comprend des moyens d'enregistrement numérique d'une voix pour créer un fichier audio numérique, et **en ce qu'**il comprend des moyens d'insertion de marqueurs temporels dans le fichier audio numérique, l'unité électronique étant paramétrée pour détecter un marqueur temporel et le traduire en signal de déclenchement.

7. Système de narration animée selon la revendication 1, **caractérisé en ce que** le support est un livre papier incluant des pages chacune associée à un émetteur d'un code numérique de page, et **en ce que** l'unité électronique est paramétrée pour détecter un code numérique de page et le traduire en signal de déclenchement.

8. Système de narration animée selon l'une quelconque des revendications 1 à 5, **caractérisé en ce qu'**il comprend une plateforme informatique donnant accès à un site web comprenant au moins une deuxième base de données de textes à narrer chacun associé à la première base de données.

9. Système de narration animée selon la revendication 8, **caractérisé en ce qu'**il comprend des unités informatiques détenues par des utilisateurs lecteurs, les unités informatiques étant aptes à communiquer avec la plateforme informatique via une application informatique.

10. Procédé mettant en œuvre un système de narration animée selon l'une quelconque des revendications 1 à 9, **caractérisé en ce qu'**il comprend une étape de synchronisation d'une animation sensorielle numérique avec un temps de lecture d'une section du texte à narrer, la synchronisation consistant à déclencher une animation sensorielle numérique par l'émission d'un signal de déclenchement, et à diffuser ladite animation sensorielle numérique en boucle jusqu'à émission à nouveau d'un signal de déclenchement et à diffuser une nouvelle animation sensorielle numérique à ladite réception à nouveau d'un signal de déclenchement.
